# EUROPÄISCHE PATENTSCHRIFT

(11) **EP 1 095 823 B1**
(45) Veröffentlichungstag und Bekanntmachung des Hinweises auf die Patenterteilung: **29.12.2004**
(21) Anmeldenummer: 00117772.4
(22) Anmeldetag: 18.08.2000
(51) Int. Cl.: B60R 21/13

(54) **Überrollschutzsystem für Kraftfahrzeuge**
Roll over protection device for vehicles
Dispositif de protection contre le retournement pour véhicules

(30) Priorität: 29.10.1999 DE 19952125
(43) Veröffentlichungstag der Anmeldung: 02.05.2001
(73) Patentinhaber: ISE Innomotive Systems Europe GmbH, 51702 Bergneustadt (DE)
(72) Erfinder: Nowack, Reinhard, 57489 Drolshagen (DE); Nowack, Stefan, 57489 Drolshagen (DE); Röhner, Stefan, Dr., 44287 Dortmund (DE)
(74) Vertreter: Fuchs Mehler Weiss & Fritzsche

(56) Entgegenhaltungen:
- EP-A- 0 500 261
- EP-A- 0 752 344
- WO-A-98/00249
- DE-A- 3 927 265
- DE-A- 19 804 946

## Beschreibung

Die Erfindung bezieht sich auf ein Überrollschutzsystem für Kraftfahrzeuge, mit einer teleskopartig ausfahrbaren Überrollkörper-Anordnung, die im Normalzustand gegen die Kraft einer vorgespannten Antriebsdruckfeder-Anordnung durch eine lösbare Halte-Anordnung in einem fahrzeugfest angebrachten Kassettengehäuse in einer unteren Ruhelage haltbar ist, und im Überschlagfall sensorgesteuert unter Lösen der Halte-Anordnung in eine obere, schützende Stellung ausfahrbar und in dieser ausgefahrenen Position mittels einer Verriegelungs-Anordnung verriegelbar ist.

Überrollschutzsysteme, wie sie insbesondere bei Cabriolets oder Sportwagen eingesetzt werden, weisen typischerweise einen geführten Überrollkörper, insbesondere Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung in eine obere, schützende und verriegelte Stellung bringbar ist.

Die Haltevorrichtung besitzt zu diesem Zweck typischerweise ein am Überrollkörper befestiges Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, gebildet ist.

Zur Verriegelung des Überrollkörpers im ganz oder teilweise ausgefahrenen Zustand sind typischerweise Zahnsegmente und mit ihnen zusammenwirkende Sperrklinken vorgesehen, die beim Ausfahren des Überrollkörpers über die Zahnsegmente "ratschen" und in der Gegenrichtung mit diesen verklinken.

Derartige ausfahrbare Überrollbügel finden insbesondere bei Cabrio-Fahrzeugen Verwendung, bei denen aus optischen Gründen auf einen starren, d.h. fest eingebauten Überrollbügel, verzichtet wird.

Überrollschutzsysteme der vorgenannten Art sind in manigfaltigen konstruktiven Ausgestaltungen bekannt geworden. So zeigt die DE 43 14 538 A 1 ein solches Überrollschutzsystem mit einem U-förmigen Überrollbügel und die gattungsgemässe DE 195 23 790 A 1 ein Überrollschutzsystem mit einem Profilkörper als Überrollkörper. Der Überrollkörper befindet sich dabei im eingefahrenen Zustand in einer sogenannten Kassette, die Führungselemente für den Überrollkörper enthält und fahrzeugfest hinter den Sitzen angebracht ist.

Die vorstehenden bekannten ausfahrbaren Überrollschutzsysteme weisen typischerweise einteilige Überrollkörper auf. Bei diesem Prinzip vergrößert sich mit dem Ausfahrhub proportional auch das Einbaumaß bezüglich der Höhe des eingefahrenen Überrollkörpers und damit der Höhe der Kassette. Große Kassetten sind aufgrund des begrenzten Einbauraums in der Fahrzeugkabine nicht einsetzbar, so daß bei den bekannten Systemen typischerweise ein Kompromiß zwischen Ausfahrweg und Kassettenhöhe eingegangen wird.

Durch die DE 197 50 457 A 1 ist ein Überrollschutzsystem der vorgenannten Art mit einem U-förmigen Überrollbügel bekannt geworden, bei dem die beiden Bügelrohre jeweils aus mindestens zwei teleskopartig ineinandergeschalteten Teil-Bügelrohren bestehen.

Der Vorteil eines derartigen Teleskopsystems bei Überrollschutzsystemen besteht darin, daß bei relativ kleinem Einbaumaß der Kassette größere Ausfahrwege des Überrollbügels erreicht werden, welches wiederum eine höherliegende Überrolltangente am Fahrzeug bedeutet, wodurch der Überlebensraum in Cabriolets nach oben verbessert wird.

Da die Teil-Bügelrohre nacheinander ausgefahren werden, erhöht sich allerdings die Ausfahrzeit im Überschlagsfall, was eine stärkere Dimensionierung der Antriebsfeder bedingt. Ferner wird die Knicksteifigkeit der Bügelrohre herabgesetzt, was entsprechend stärker dimensionierte Bügelrohre bedingt. Diese Bedingungen erhöhen das Gewicht und das Bauvolumen des Systems.

Der Erfindung liegt die Aufgabe zugrunde, ausgehend von dem eingangs bezeichneten Überrollschutzsystem für Kraftfahrzeuge, mit einer teleskopartig ausfahrbaren Überrollkörper-Anordnung, die im Normalzustand gegen die Kraft einer vorgespannten Antriebsdruckfeder-Anordnung durch eine lösbare Halte-Anordnung in einem fahrzeugfest angebrachten Kassettengehäuse in einer unteren Ruhelage haltbar ist, und im Überschlagfall sensorgesteuert unter Lösen der Halte-Anordnung in eine obere, schützende Stellung ausfahrbar und in dieser ausgefahrenen Position mittels einer Verriegelungs-Anordnung verriegelbar ist, dieses so auszubilden, daß kürzere Ausfahrzeiten der Überrollkörper-Anordnung bei kleinem Bauvolumen und höherer Knicksteifigkeit erzielt werden können.

Diese Aufgabe wird erfindungsgemäß dadurch gelöst, daß das Überrollschutzsystem als Doppelhub-Kassette ausgebildet ist, mit
- einem Mittelteil der Überrollkörper-Anordnung, bestehend aus einem Profilkörper, der in dem Kassettengehäuse längsverschiebbar gehaltert ist, dem eine erste lösbare Haltevorrichtung für das Halten des eingefahrenen Mittelteiles gegen die Kraft mindestens einer ersten Antriebsdruckfeder in dem Kassettengehäuse, und eine erste Verriegelungseinrichtung zum Verriegeln des ausgefahrenen Mittelteiles gegen das Kassettengehäuse zugeordnet sind,
- einem Oberteil der Überrollkörper-Anordnung, das in dem Mittelteil längsverschiebbar gehaltert ist, dem eine zweite lösbare Haltevorrichtung für das Halten des eingefahrenen Oberteiles gegen die Kraft eines zweiten Antriebsdruckfeder-Systems in dem Mittelteil, und eine zweite Verriegelungseinrichtung zum Verriegeln des ausgefahrenen Oberteiles gegen das Mittelteil zugeordnet sind, und
- einer Verknüpfung der Auslösung der beiden Haltevorrichtungen derart, daß sensorgesteuert das Mittelteil und das Oberteil simultan ausfahrbar sind.

Die typischen Vorteile der erfindungsgemäßen Doppelhub-Kassette sind:
- kleiner Bauraum in Bezug auf die Höhe
- durch überlagernde Bewegungen kurze Ausfahrzeit bei langem Hub
- variable Gestaltung je nach Platz im Fond
- relativ kleine Kassette bei "Normalhub" oder bei größerem Bauraum sehr großer Ausfahrhub realisierbar. Beispielsweise erreicht nach einem Gesamthub von 310 mm [ = 170 mm (Mittelteil) + 140 mm (Bügelrohr)] das System ein überkragendes Maß von 395 mm
- durch konstruktive Gestaltung der unterschiedlichen Festigkeitsquerschnitte von Bügelrohr und Mittelteil kann der Energieabbau gezielt weicher oder härter erfolgen
- der Verformungswiderstand ist beeinflußbar, durch größeren "Hub Mittelteil" und kleineren "Hub Bügel" größer werdend bzw. kleiner werdend bei umgekehrten Hüben.

Die Auslösung der beiden Haltevorrichtungen kann prinzipiell so getroffen sein, daß sowohl die erste als auch die zweite Haltevorrichtung ein sensorgesteuertes Auslösesystem aufweist, die synchron aktivierbar sind.

Gemäß einer Weiterbildung der Erfindung ist die Auslösung vorteilhaft so getroffen, daß allein die erste Haltevorrichtung ein sensorgesteuertes Auslösesystem aufweist und die zweite Haltevorrichtung anschlaggesteuert durch die Ausfahrbewegung des Mittelteiles lösbar ist.

Dadurch ist mit Vorteil nur ein Auslöse-Aktuator notwendig.

Diese Weiterbildung ist konstruktiv auf besonders einfache und wirksame Weise so ausgebildet, daß die zweite Haltevorrichtung aus einem unten am Oberteil angebrachten Halter und einer damit in verklinkbarer Wirkverbindung stehenden, am Mittelteil federvorgespannt angelenkten Halteklinke besteht, an der ein Hebel angelenkt und ein Auflagebolzen fest angebracht ist, derart, daß im Ruhezustand der Hebel am Auflagebolzen anliegt, und daß zur Auslösung der zweiten Haltevorrichtung im unteren Teil des Kassettengehäuses nahe dessen Boden, jedoch oberhalb des Hebels, ein Anschlag fest angebracht ist, derart, daß bei einer Aufwärtsbewegung des Mittelteiles der Hebel, gegen den Auflagebolzen drückend, die Halteklinke unter Freigabe des Halters verschwenkt und beim Wiedereinfahren des Mittelteiles mit dem Oberteil der Hebel unter Verschwenkung nach oben an dem Anschlag in die verklinkte Ausgangsposition vorbeiratscht.

Dabei weist die Halteklinke vorzugsweise eine Einlaufschräge zur Erleichterung des Einfahrens des Halters auf.

Für das Oberteil kann ein Profilkörper verwendet werden, der in dem Mittelteil entsprechend geführt ist.

Besonders günstige mechanische Bedingungen werden jedoch erzielt, wenn gemäß einer weiteren Ausgestaltung der Erfindung das Oberteil der Überrollkörper-Anordnung ein Bügelrohr ist, und in dem Profilkörper des Mittelteiles zwei Längsöffnungen zur Aufnahme der Schenkel des Bügelrohres und jeweils einer Antriebsdruckfeder ausgebildet sind. Dabei sind zweckmäßig zur Führung des Bügelrohres in den Längsöffnungen des Mittelteiles Führungsbuchsen, vorzugsweise aus Kunststoff, angeordnet.

Um eine vorgegebene Ausfahrlänge beim Ausfahren der Überrollkörper-Anordnung zu erzielen, ist die Anordnung gemäß einer Ausgestaltung der Erfindung vorteilhaft so getroffen, daß in dem Kassettengehäuse mindestens ein Anschlag zur Begrenzung der Ausfahrbewegung des Mittelteiles und an dem Mittelteil mindestens ein Anschlag zur Begrenzung der Ausfahrbewegung des Oberteiles angebracht sind.

Für die Verriegelung der ausgefahrenen Teile der Überrollkörper-Anordnung in der ausgefahrenen Stellung finden vorzugsweise die bewährten Elemente eines Zahnsegmentes und einer Sperrklinke Verwendung. Dabei ist die Anordnung so getroffen, daß zur Verriegelung des ausgefahrenen Mittelteiles mit dem Kassettengehäuse am Mittelteil eine Zahnstange fest und am Kassettengehäuse eine Sperrklinke schwenkbar angebracht ist und daß zur Verriegelung des ausgefahrenen Oberteiles mit dem Mittelteil am Oberteil mindestens eine Zahnstange fest und am Mittelteil eine zugeordnete Sperrklinke schwenkbar angebracht ist.

Anhand eines in den Zeichnungen dargestellten Ausführungsbeispieles der erfindungsgemäßen Doppelhub-Kassette wird die Erfindung näher beschrieben.

Es zeigen:
- Fig. 1: in einer Explosions-Darstellung die wesentlichen Bauteile der Doppelhub-Kassette, mit Kassettengehäuse, Mittelteil und Bügelrohr,
- Fig. 2: in einer schematisierten Teil-Längsschnitt-Darstellung den Aufbau der Doppelhub-Kassette im eingefahrenen Zustand,
- Fig. 3: eine Querschnittsansicht durch die Doppelhub-Kassette,
- Fig. 4: in einer schematisierten Teil-Längsschnitt-Darstellung den Aufbau der Doppelhub-Kassette im ausgefahrenen Zustand,
- Fig. 5: in einer Ausschnitt-Darstellung aus Fig. 2 die Verrastung des Bügelrohres im Mitteilteil im eingefahrenen Zustand sowie dessen automatische Freigabe,
- Fig. 6: in einer perspektivischen Darstellung die Doppelhub-Kassette im eingefahrenen Zustand nach Fig. 2, und
- Fig. 7: in einer perspektivischen Darstellung die Doppelhub-Kassette im ausgefahrenen Zustand nach Fig. 4.

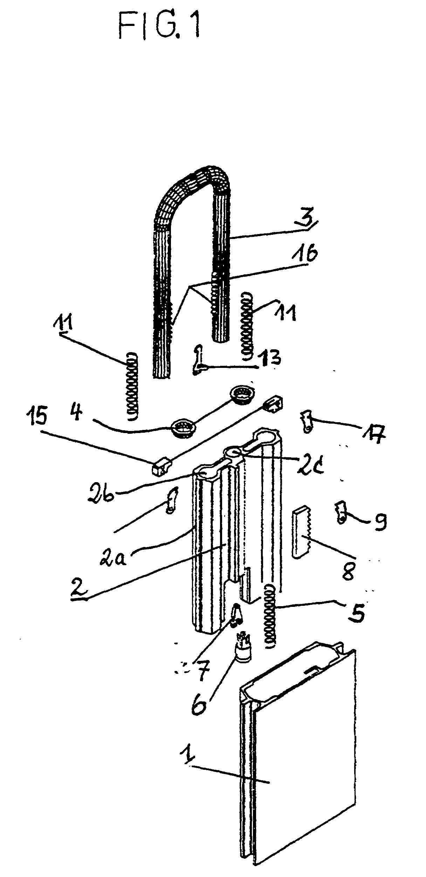

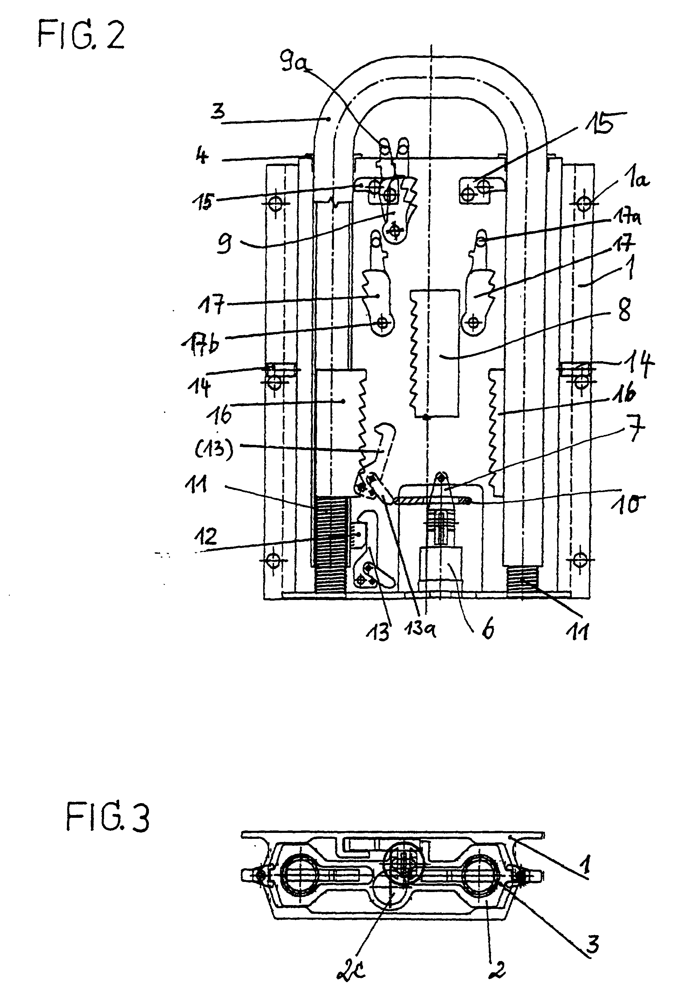

Die Figur 1 zeigt in einer Explosions-Darstellung die wesentlichen Bauteile, deren Zusammenwirken aus den Figuren 2 bis 5 ersichtlich sind.

Das erfindungsgemäße Überrollschutzsystem mit einer Doppelhub-Kassette weist ein Kassettengehäuse 1 auf, dessen Profilquerschnitt aus Figur 3 ersichtlich ist. Es besteht vorzugsweise aus einem Strangpreßprofil, kann jedoch auch aus einzelnen Blechteilen zusammengefügt werden. Das Kassettengehäuse 1 ist auf übliche Weise über Befestigungslöcher 1 a (Fig. 2) fahrzeugfest angeordnet, d.h. beispielsweise hinter den Fahrzeugsitzen auf dem Fahrzeugboden oder an einer Fahrzeugwandung, oder mit dem Fahrzeugsitz direkt verbunden (integral).

In dem Kassettengehäuse 1 ist ein zweiter Profilkörper, das Mittelteil 2, geführt verschiebbar aufgenommen. Die äußere Konfiguration dieses Mittelteiles 2 bestimmt die Innenkonfiguration des Kassettengehäuses 1 und damit das Profil dieses Gehäuses.

Um eine gute Führung des Mittelteiles 2 zu gewährleisten, weist dieses entsprechende Längs-Führungselemente, z.B. zu beiden Seiten zwei Längsvorsprünge 2 a, und das Kassettengehäuse 1 dazu komplementäre Längs-Führungselemente, z.B. zu beiden Schmalseiten entsprechende Längsnuten, auf. Zur Unterstützung der Führung können zusätzlich auch Rollen vorgesehen sein.

In dem Mittelteil 2 ist in entsprechenden Längsöffnungen 2 b ein Bügelrohr 3 verschiebbar aufgenommen. Zur Führung dieses Bügelrohres 3 dienen Führungsbuchsen 4, die vorzugsweise aus Kunststoff hergestellt und einschlägig bekannt sind.

Der Profilkörper des Mitteilteiles 2 ist vorzugsweise ebenfalls ein Strangpress-Profilteil, kann jedoch auch, wie das Kassettengehäuse 1, aus mehreren Blechteilen zusammengesetzt sein.

Das Bügelrohr 3 ist vorzugsweise ein gebogenes Stahlrohr oder ein gebogenes Strangpress-Profilteil.

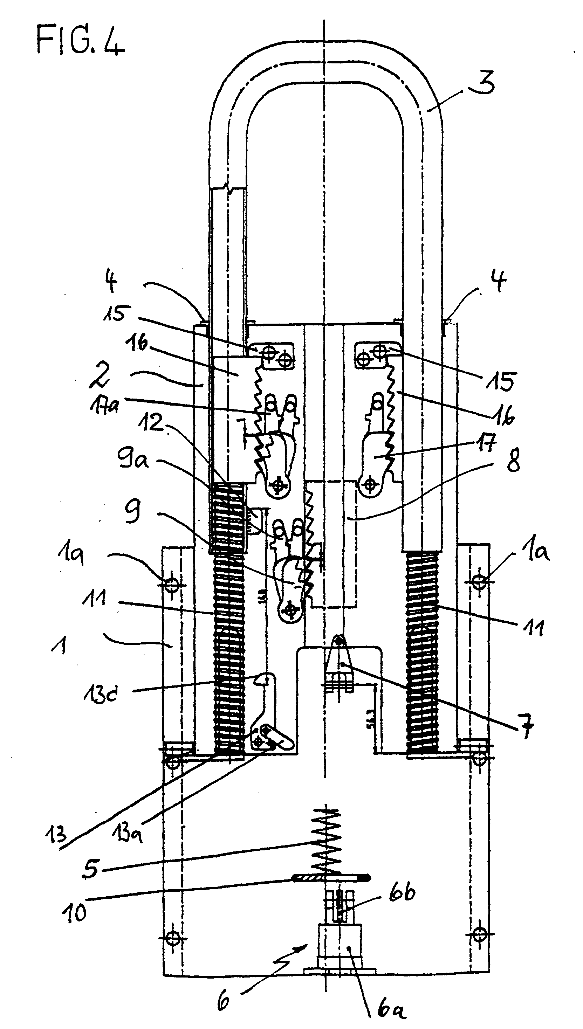

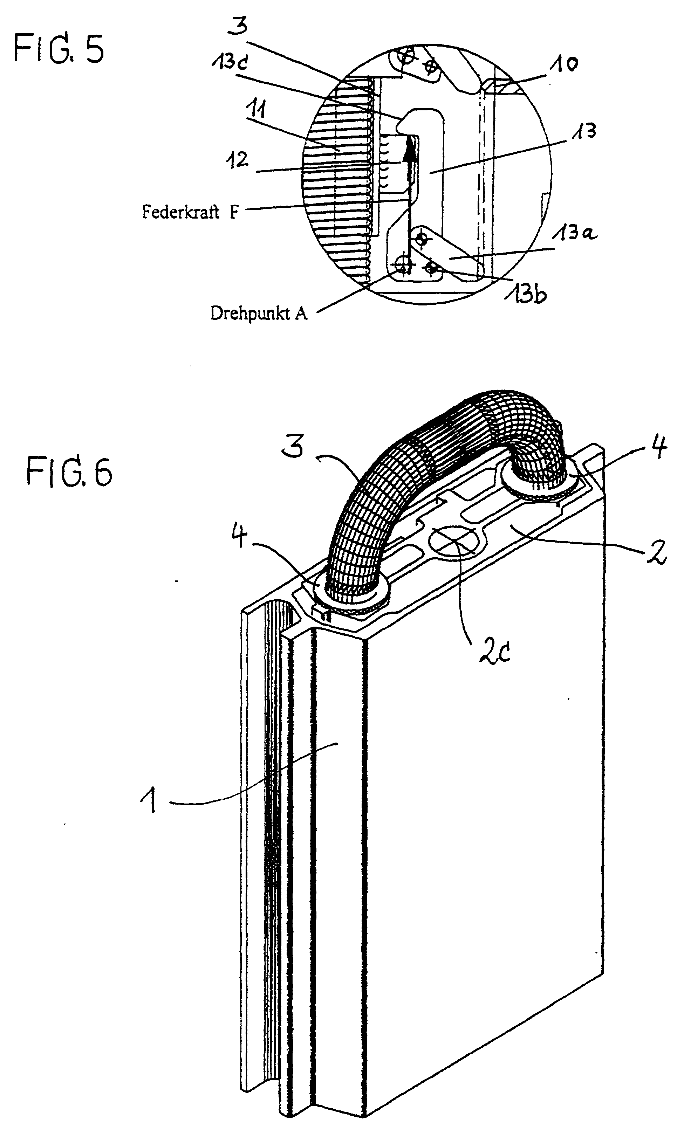

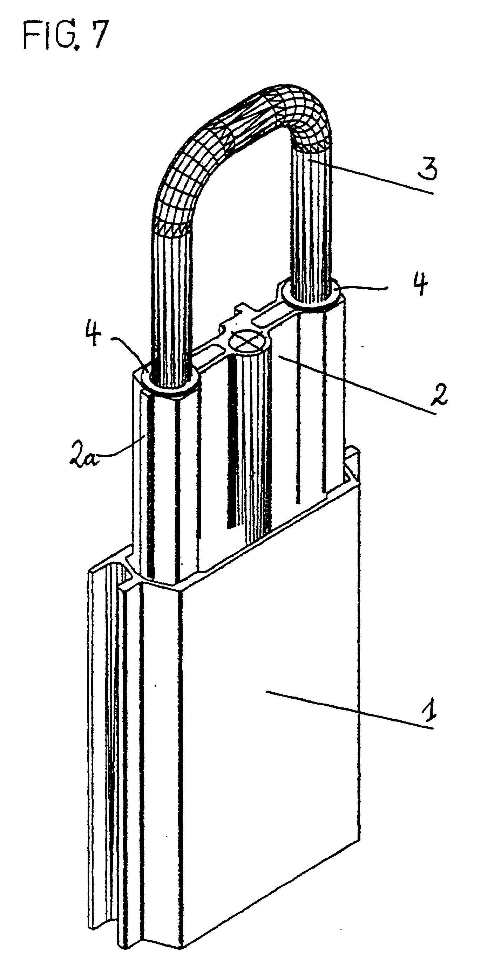

Die bislang beschriebenen Bauteile, das Kassettengehäuse 1, das Mittelteil 2 und das Bügelrohr 3 bilden die Grund-Komponenten der erfindungsgemäßen Doppelhub-Kassette, die ähnlich dem Teleskop-Prinzip funktioniert. Im Ruhezustand ist das Mitteilteil 2 in dem Kassettengehäuse 1 und das Bügelrohr 3 in dem Mittelteil 2 aufgenommen (Figuren 2 und 6). Beim Aufstellen des Überrollsystems fahren teleskopartig das Mittelteil 2 aus dem Kassettengehäuse 1 und das Bügelrohr 3 aus dem Mittelteil 2 aus (Figuren 4 und 7).

Entsprechend den bekannten Überrollschutzsystemen weist auch die erfindungsgemäße Doppelhub-Kassette eine lösbare Haltevorrichtung, um das System im Ruhezustand gegen die Kraft von vorgespannten Antriebsfedern lösbar im Fall eines drohenden Überschlages zu halten sowie Verriegelungseinrichtungen als Wiedereinfahrsperre auf, die in erfindungsspezifischer Weise angeordnet sind.

Zum Antrieb des Mittelteiles 2 ist in diesem in der Längsöffnung 2 c eine erste Antriebsfeder 5 vorgesehen. Diese ist mit ihrem unteren Ende fahrzeugfest in dem Kassettengehäuse 1 an dessen Boden befestigt und stützt sich mit ihrem oberen Ende im Mittelteil 2 an einem entsprechenden Anschlag ab.

Die Antriebsfeder 5 ist so dimensioniert, daß, wenn das Mittelteil 2 in dem Kassettengehäuse 1 eingefahren ist, die Feder so vorgespannt ist, daß bei einer Auslösung des Systems das Mittelteil 2 mit der notwendigen Ausfahrgeschwindigkeit noch oben schnellt.

Die lösbare Haltevorrichtung weist ein sensorgesteuertes Auslösesystem in Form eines sogenannten Aktuators 6 auf, der fahrzeugfest am Boden des Kassettengehäuses 1 angebracht ist und der in mechanischer Wirkverbindung mit einem Halteglied 7 steht, das am Mittelteil 2 befestigt ist. Dieser Akutuator 6 ist vorzugsweise ein Auslösemagnet mit einem Klinkmechanismus für die Wirkverbindung mit dem Halteglied, der von einem im Fall eines drohenden Überschlages ansprechenden Sensor aktiviert wird und ein bewegliches Verklinkungselement in einen entklinkenden Zustand mit dem Halteglied 7 bringt.

Derartige lösbare Haltevorrichtungen sind in zahlreichen Varianten bekannt geworden. Vorzugsweise besteht der Aktuator 6 aus einem Auslösemagneten 6 a mit Doppelhebelsystem 6 b (Fig. 4) gemäß der DE 197 50 693 A1 und das Halteglied 7 aus einem in einer Gabel gehalterten Haltebolzen für den Wirkeingriff mit dem Doppelhebelsystem.

Prinzipiell kann anstelle des Auslösemagneten ein pyrotechnisches Auslösesystem mit Klinkmechanismus entsprechend der DE 43 401 A 1 vorgesehen werden.

Wenn das Halteglied 7 mit dem Aktuator 6 verklinkt ist, wird das Mittelteil 2 mit vorgespannter erster Antriebsfeder 5 in dem Kassettengehäuse 1 in der Ruhelage gehalten. Bei einem drohenden Überschlag gibt der Klinkmechanismus des Aktuators 6 das Halteglied 7 und damit das Mittelteil 2 frei, das durch die expandierende Antriebsfeder 5 nach oben schnellt. Anschläge 14 am Kassettengehäuse begrenzen dabei die Aufwärtsbewegung.

Damit das Mittelteil 2 im ausgefahrenen Zustand nicht ungewollt wieder zurückgefahren bzw. zurückgedrückt werden kann, ist eine Verriegelungseinrichtung in Form einer Zahnstange 8, die am Profilkörper des Mittelteiles 2 befestigt ist und einer mit der Zahnstange 8 in Wirkverbindung stehenden Sperrklinke 9 mit einem Hebelarm-Fortsatz 9 a, die im oberen Abschnitt des Kassettengehäuses federbelastet verschwenkbar angebracht ist, vorgesehen. In den Figuren 2 und 4 ist diese Sperrklinke 9 in zwei Stellungen dargestellt. Aufgrund einer Federvorspannung befindet sie sich im Normalbetrieb in der nach rechts verschwenkten Stellung. Beim Ausfahren des Mittelteiles "ratschen" daher die Zähne der Sperrklinke 9 über die Zähne der Zahnstange 8, wogegen sie in der Gegenrichtung in verriegelnden Wirkeingriff mit den Zähnen der Zahnstange 8 gelangen. Durch eine manuelle Betätigung des Hebelarmes 9 a kann die Sperrklinke 9 außer Eingriff mit der Zahnstange 8 gebracht werden, so daß dann der Mittelteil 2 manuell in die Ausgangslage gegen die Kraft der Antriebsfeder 5 gedrückt werden kann.

An dem Kassettengehäuse 1 ist ferner ein Anschlag 10 angebracht, auf dem sich auch das untere Ende der ersten Antriebsfeder abstützt (Fig. 4). Die Funktion dieses Anschlages 10 wird später noch erläutert werden.

Das Mittelteil 2 nimmt, wie bereits erwähnt, in den Öffnungen 2 b das Bügelrohr 3 auf. Für die Ausfahrbewegung des Bügelrohres sind zwei weitere Antriebsfedern 11 in den Öffnungen 2 b vorgesehen, die durch das Bügelrohr beim Einfahren vorspannbar sind.

Die Haltevorrichtung für das Halten des Überroll-Bügelrohres 3 in der Ruhelage, d.h. in der es im Mittelteil eingefahren ist, besteht in einem am Bügelrohr fest angebrachten Halter 12 und einer Halteklinke 13, die am Mittelteil 2 schwenkbar angebracht ist, deren Zusamenwirken später noch beschrieben wird.

Zur Verriegelung des Bügelrohres 3 in seiner ausgefahrenen Stellung (Figuren 4 und 7), die durch zwei Anschläge 15 begrenzt wird, die am Mittelteil 2 angebracht sind, ist an jedem Bügelrohrschenkel eine Zahnstange 16 angebracht, die jeweils im Wirkeingriff mit einer Sperrklinke 17 steht, die am Mittelteil 2, schwenkbar um die Achse 17 b, angebracht ist. Jede Sperrklinke 17 besitzt dabei ebenfalls einen Fortsatz 17 a für ein manuelles Entsperren des Bügelrohres 3.

Die erfindungsgemäße Doppelhub-Kassette funktioniert ähnlich dem Teleskop-Prinzip. Die Aufstellung erfolgt in zwei Phasen: Zunächst fährt das Mittelteil als erste Baugruppe mit verriegeltem Bügelrohr aus dem Kassettengehäuse, kurze Zeit später wird das Bügelrohr ausgelöst und fährt dann simultan mit dem Mittelteil aus.

Wird der Aktuator 6 ausgelöst, und das Halteglied 7 freigegeben, fährt das komplette Mittelteil einschließlich Bügelrohr 3 aus. Erreicht die Halteklinke 13 dabei den Anschlag 10, schwenkt diese nach innen; das Bügelrohr 3 wird dadurch ausgelöst (Fig. 2). Bügelrohr 3 und Mittelteil 2 fahren dann gleichzeitig bis gegen die jeweiligen Anschläge 14, 15. Die federbelasteten Sperrklinken 9 bzw. 17 verrasten in den Zahnstangen 8 bzw. 16 und stützen Bügelrohr 3 und Mitteilteil 2 ab.

Das Halten des Bügelrohres 3 im eingefahrenen Zustand sowie dessen automatische Freigabe soll anhand der Fig. 5 nochmals näher beschrieben werden.

Im eingefahrenen Zustand ist die Halteklinke 13 mit dem Halter 12 am Bügelrohr verklinkt. Wie die Fig. 4 zeigt, liegt die Kraft, welche die Crashfeder 11 auf den Halter 12 überträgt rechts neben Drehpunkt A der Halteklinke. Das dadurch entstehende Moment auf die Halteklinke wirkt linksdrehend, also schließend, eine Selbstöffnung ist somit ausgeschlossen.

Bewegt sich das Mittelteil 2 nach seiner Freigabe nach oben, erreicht ein an der Halteklinke 13 angelenkter Hebel 13 a nach etwa 60 mm den Anschlag 10. Dieser bewirkt, da der Hebel 13 a gegen einen Auflagebolzen 13 b drückt, eine Rechtsdrehung der Halteklinke 13. Damit dreht diese weg und der Halter 12 a am Bügelrohr wird freigegeben, so daß die Crashfedern 11 das Bügelrohr 3 nach oben ausfahren.

Wird das Bügelrohr 3 nach einer Testauslösung wieder eingeschoben, dreht sich die Halteklinke 13 über eine Anlaufschräge 13 c in die Öffnungsposition. Ist die Auflage weit genug nach unten geschoben worden, schließt sich die unter Federspannung (Drehschenkelfeder, nicht dargestellt) stehende Halteklinke 13. Das System ist wieder verrastet.

Beim Rückstellen des Mittelteils 3 kann sich der Hebel 13 a am Anschlag 10 ungehindert nach oben drehen, dadurch verbleibt die Halteklinke 13 in der verrasteten Position.

Durch diese Lösung des Halters des Bügelrohres ist ein zweiter Aktuator überflüssig.

Zur Reversierung nach einer Testauslösung können die ausgefahrenen Teile mittels der Fortsätze 9 a bzw. 17 an den Sperrklinken entriegelt und von Hand wieder zusammengeschoben werden. Dazu werden erst die Bügelsperrklinken 17 gelöst und das Bügelrohr 3 eingeschoben, bis dieses verrastet ist. Anschließend wird die Sperrklinke 9 des Mittelteiles entriegelt und das Mittelteil 2 (mit Bügelrohr) nach unten geschoben, bis es im Aktuator 6 ebenfalls verrastet.

Die wesentlichen Charakteristika der erfindungsgemäßen Doppelhub-Kassette sind daher:
1. Überrollschutzsystem-Kassette mit zwei (oder mehr) teleskopartig ausfahrenden Elementen.
2. Durch die Doppelbewegung ist ein releativ großer Hub bei kleinem Einbauraum und kurzer Ausfahrzeit erzielbar.
3. Es erfolgt eine simultane Bewegung der ausfahrenden Teile.
4. Es erfolgt ein zwangsläufiges Auslösen der zweiten Stufe (Bügelrohr) bedingt durch das Ausfahren der ersten Bewegungsstufe (Mittelteil).
5. Es ist eine gezielte Festigkeitsabstimmung, je nach Ausfahrlänge des steiferen Mittelteils oder des weicheren Bügelrohres, möglich.

### Bezugszeichenliste

- 1: Kassettengehäuse
- 1 a: Befestigungslöcher
- 2: Mittelteil
- 2 a: Längsvorsprünge
- 2 b: Längsöffnungen für Bügelrohr
- 2 c: Längsöffnungen für Antriebsfeder
- 3: Bügelrohr
- 4: Führungsbuchsen
- 5: 1. Antriebsfeder
- 6: Aktuator
- 6 a: Auslösemagnet
- 6 b: Doppelhebelsystem
- 7: Halteglied
- 8: Zahnstange
- 9: Sperrklinke
- 9 a: Hebelarmfortsatz
- 10: Anschlag
- 11: Weitere Antriebsfeder
- 12: Halter
- 13: Halteklinke
- 13 a: Hebel
- 13 b: Auflagebolzen
- 13 c: Einlaufschräge
- 14: Anschläge
- 15: Anschläge
- 16: Zahnstange
- 17: Sperrklinke
- 17 a: Fortsatz
- 17 b: Achse

## Patentansprüche

1. Überrollschutzsystem für Kraftfahrzeuge, mit einer teleskopartig ausfahrbaren Überrollkörper-Anordnung, die im Normalzustand gegen die Kraft einer vorgespannten Antriebsdruckfeder-Anordnung durch eine lösbare Halte-Anordnung in einem fahrzeugfest angebrachten Kassettengehäuse in einer unteren Ruhelage haltbar ist, und im Überschlagfall sensorgesteuert unter Lösen der Halte-Anordnung in eine obere, schützende Stellung ausfahrbar und in dieser ausgefahrenen Position mittels einer Verriegelungs-Anordnung verriegelbar ist, **dadurch gekennzeichnet, daß** das Überrollschutzsystem als Doppelhub-Kassette ausgebildet ist, mit
- einem Mittelteil (2) der Überrollkörper-Anordnung, bestehend aus einem Profilkörper, der in dem Kassettengehäuse (1) längsverschiebbar gehaltert ist, dem eine erste lösbare Haltevorrichtung (6, 7) für das Halten des eingefahrenen Mittelteiles (2) gegen die Kraft mindestens einer ersten Antriebsdruckfeder (5) in dem Kassettengehäuse (1), und eine erste Verriegelungseinrichtung (8, 9) zum Verriegeln des ausgefahrenen Mittelteiles (2) gegen das Kassettengehäuse (1) zugeordnet sind,
- einem Oberteil der Überrollkörper-Anordnung, das in dem Mittelteil (2) längsverschiebbar gehaltert ist, dem eine zweite lösbare Haltevorrichtung (12, 13) für das Halten des eingefahrenen Oberteiles gegen die Kraft eines zweiten Antriebsdruckfeder-Systems (11) in dem Mittelteil (2), und eine zweite Verriegelungseinrichtung (16, 17) zum Verriegeln des ausgefahrenen Oberteiles gegen das Mittelteil (2) zugeordnet sind, und
- einer Verknüpfung der Auslösung der beiden Haltevorrichtungen (6, 7; 12, 13) derart, daß sensorgesteuert das Mittelteil (2) und das Oberteil simultan ausfahrbar sind.

2. Überrollschutzsystem nach Anspruch 1, **dadurch gekennzeichnet, daß** sowohl die erste als auch die zweite Haltevorrichtung (6, 7; 12, 13) ein sensorgesteuertes Auslösesystem aufweist, die synchron aktivierbar sind.

3. Überrollschutzsystem nach Anspruch 1, **dadurch gekennzeichnet, daß** allein die erste Haltevorrichtung (6, 7) ein sensorgesteuertes Auslösesystem (6 a) aufweist und die zweite Haltevorrichtung (12, 13) anschlaggesteuert durch die Ausfahrbewegung des Mittelteiles (2) lösbar ist.

4. Überrollschutzsystem nach Anspruch 3, **dadurch gekennzeichnet, daß** die zweite Haltevorrichtung aus einem unten am Oberteil angebrachten Halter (12) und einer damit in verklinkbarer Wirkverbindung stehenden, am Mittelteil (2) federvorgespannt angelenkten Halteklinke (13) besteht, an der ein Hebel (13 a) angelenkt und ein Auflagebolzen (13 b) fest angebracht ist, derart, daß im Ruhezustand der Hebel (13 a) am Auflagebolzen (13 b) anliegt, und daß zur Auslösung der zweiten Haltevorrichtung im unteren Teil des Kassettengehäuses (1) nahe dessen Boden, jedoch oberhalb des Hebels (13 a), ein Anschlag (10) fest angebracht ist, derart, daß bei einer Aufwärtsbewegung des Mittelteiles (2) der Hebel (13 a), gegen den Auflagebolzen (13 b) drückend, die Halteklinke (13) unter Freigabe des Halters (12) verschwenkt und beim Wiedereinfahren des Mittelteiles (2) mit dem Oberteil der Hebel (13 a) unter Verschwenkung nach oben an dem Anschlag (10) in die verklinkte Ausgangsposition vorbeiratscht.

5. Überrollschutzsystem nach Anspruch 4, **dadurch gekennzeichnet, daß** die Halteklinke (12) eine Einlaufschräge (13 c) für das Einfahren des Halters (12) aufweist.

6. Überrollschutzsystem nach einem der Ansprüche 1 bis 5, **dadurch gekennzeichnet, daß** das Oberteil der Überrollkörper-Anordnung ein Bügelrohr (3) ist, und in dem Profilkörper des Mittelteiles (2) zwei Längsöffnungen (2 b) zur Aufnahme der Schenkel des Bügelrohres (13) und jeweils einer Antriebsdruckfeder (11) ausgebildet sind.

7. Überrollschutzsystem nach Anspruch 6, **dadurch gekennzeichnet, daß** zur Führung des Bügelrohres (3) in den Längsöffnungen (2 b) Führungsbuchsen (4) angeordnet sind.

8. Überrollschutzsystem nach einem der Ansprüche 1 bis 7, **dadurch gekennzeichnet, daß** in dem Kassettengehäuse (1) mindestens ein Anschlag (14) zur Begrenzung der Ausfahrbewegung des Mittelteiles (2) und an dem Mittelteil (2) mindestens ein Anschlag (15) zur Begrenzung der Ausfahrbewegung des Oberteiles angebracht sind.

9. Überrollschutzsystem nach einem der Ansprüche 1 bis 8, **dadurch gekennzeichnet, daß** zur Verriegelung des ausgefahrenen Mittelteiles (2) mit dem Kassettengehäuse (1) am Mittelteil (2) eine Zahnstange (8) fest und am Kassettengehäuse (1) eine Sperrklinke (9) schwenkbar angebracht ist.

10. Überrollschutzsystem nach einem der Ansprüche 1 bis 9, **dadurch gekennzeichnet, daß** zur Verriegelung des ausgefahrenen Oberteiles mit dem Mittelteil (2) am Oberteil mindestens eine Zahnstange (11) fest und am Mittelteil (2) eine zugeordnete Sperrklinke (17) schwenkbar angebracht ist.

## Claims

1. Roll-over protection system for motor vehicles, having a telescopically extensible roll-over body arrangement which, in the normal state, can be held in a lower, resting position against the force of a pre-loaded driving pressure spring arrangement by a releasable retaining arrangement in a cassette housing fixed to the vehicle and, in the event of a rollover, is extensible into an upper, protecting position with the retaining arrangement being released under sensor control and is lockable in that extended position by means of a locking arrangement, **characterised in that** the roll-over protection system is constructed as a double-travel cassette, comprising
- a middle part (2) of the roll-over body arrangement, consisting of a profiled section body which is held in the cassette housing (1) in a longitudinally displaceable manner and which is associated with a first releasable retaining device (6, 7) for holding the retracted middle part (2) in the cassette housing (1) against the force of at least a first driving pressure spring (5) and with a first locking device (8, 9) for locking the extended middle part (2) with respect to the cassette housing (1),
- an upper part of the roll-over body arrangement, which upper part is held in the middle part (2) in a longitudinally displaceable manner and is associated with a second releasable retaining device (12, 13) for holding the retracted upper part in the middle part (2) against the force of a second driving pressure spring system (11) and with a second locking device (16, 17) for locking the extended upper part with respect to the middle part (2), and
- a linkage of the release of the two retaining devices (6, 7; 12, 13) in such a manner that the middle part (2) and the upper part are extensible simultaneously under sensor control.

2. Roll-over protection system according to claim 1, **characterised in that** both the first and the second retaining device (6, 7; 12, 13) have a sensor-controlled released system, which release systems can be activated synchronously.

3. Roll-over protection system according to claim 1, **characterised in that** only the first retaining device (6, 7) has a sensor-controlled release system (6, 7) and the second retaining device (12, 13) is releasable in a stop-actuated manner by the extension movement of the middle part (2).

4. Roll-over protection system according to claim 3, **characterised in that** the second retaining device consists of a retainer (12) mounted at the bottom of the upper part and a retaining latch (13) which is articulated to the middle part (2) with spring preloading and is in latchable operative connection with the retainer (12), to which retaining latch (13) a lever (13a) is articulated and a support pin (13b) is fixed in such a manner that, in the resting state, the lever (13a) rests on the support pin (13b), and, for releasing the second retaining device, a stop (10) is fixedly mounted in the lower portion of the cassette housing (1), close to the base thereof but above the lever (13a), in such a manner that, upon upward movement of the middle part (2), the lever (13a), pressing against the support pin (13b), pivots the retaining latch (13) thereby releasing the retainer (12) and, as the middle part (2) is retracted again together with the upper part, the lever (13a) moves, while being pivoted upward, in the manner of ratchet past the stop (10) and into the latched starting position.

5. Roll-over protection system according to claim 4, **characterised in that** the retaining latch (12) has a run-up slope (13c) for engagement of the retainer (12).

6. Roll-over protection system according to any one of claims 1 to 5, **characterised in that** the upper part of the roll-over body arrangement is a U-shaped pipe (3), and two longitudinal apertures (2b) for receiving the limbs of the U-shaped pipe (13) and in each case a driving pressure spring (11) are constructed in the profiled section body of the middle part (2).

7. Roll-over protection system according to claim 6, **characterised in that,** for guiding the U-shaped pipe (3), guide bushes (4) are arranged in the longitudinal apertures (2b).

8. Roll-over protection system according to any one of claims 1 to 7, **characterised in that** at least one stop (14) for limiting the extension movement of the middle part (2) is mounted in the cassette housing (1), and at least one stop (15) for limiting the extension movement of the upper part is mounted on the middle part (2).

9. Roll-over protection system according to any one of claims 1 to 8, **characterised in that**, for locking the extended middle part (2) to the cassette housing (1), a toothed rack (8) is fixedly mounted on the middle part (2) and a pawl (9) is pivotally mounted on the cassette housing (1).

10. Roll-over protection system according to any one of claims 1 to 9, **characterised in that,** for locking the extended upper part to the middle part (2), at least one toothed rack (11) is fixedly mounted on the upper part and an associated pawl (17) is pivotally mounted on the middle part (2).

## Revendications

1. Système de protection contre le retournement pour véhicules automobiles, comportant une structure de corps de sécurité extractible de manière télescopique, qui est destinée, à l'état normal, à être maintenue au moyen d'un système de retenue détachable dans un boîtier en coffret monté fixe dans le véhicule, dans une position de repos inférieure à l'encontre de la force exercée par un système de ressort de commande par pression précontraint, et en cas de retournement, à être extraite sous l'effet du relâchement du système de retenue, commandé par capteur, dans une position de protection supérieure et à être bloquée dans cette position extraite au moyen d'un système de blocage, **caractérisé en ce que** le système de protection contre le retournement est conçu sous forme de coffret à double mouvement, comportant
- une partie centrale (2) de la structure de corps de sécurité, qui est formée par un corps profilé, logé mobile en sens longitudinal dans le boîtier en coffret (1), et à laquelle sont associés un premier dispositif de retenue (6, 7) détachable destiné à retenir la partie centrale (2) en position insérée dans le boîtier en coffret (1) à l'encontre de la force exercée par au moins un premier ressort de commande par pression (5), et un premier dispositif de blocage (8, 9) destiné à bloquer contre le boîtier en coffret (1) la partie centrale (2) extraite,
- une partie supérieure de la structure de corps de sécurité, qui est logée mobile en sens longitudinal dans la partie centrale (2), à laquelle sont associés un deuxième dispositif de retenue (12, 13) détachable destiné à retenir la partie supérieure en position insérée dans la partie centrale (2) à l'encontre de la force exercée par un deuxième système à ressort de commande par pression (11), et un deuxième dispositif de blocage (16, 17) destiné à bloquer contre la partie centrale (2) la partie supérieure en position extraite, et
- un enchaînement du déclenchement des deux dispositifs de retenue (6, 7 ; 12, 13), de telle sorte que, sous la commande d'un capteur, la partie centrale (2) et la partie supérieure sont extractibles simultanément.

2. Système de protection contre le retournement selon la revendication 1, **caractérisé en ce que** le premier dispositif de retenue (6, 7), de même que le deuxième dispositif de retenue (12, 13) comportent un système de déclenchement commandé par capteur, lesquels systèmes peuvent être activés de manière synchrone.

3. Système de protection contre le retournement selon la revendication 1, **caractérisé en ce que** le premier dispositif de retenue (6, 7) comporte un système de déclenchement (6a) commandé par un capteur et le deuxième dispositif de retenue (12, 13), commandé par butée, peut être déclenché par le mouvement d'extraction de la partie centrale (2).

4. Système de protection contre le retournement selon la revendication 3, **caractérisé en ce que** le deuxième dispositif de retenue est formé par un support (12), agencé dans le bas de la partie supérieure, et par un cliquet de retenue (13), qui est encliqueté en liaison active avec ledit support et articulé sous précontrainte d'un ressort contre la partie centrale (2) et contre lequel sont agencés de manière articulée un levier (13a) et de manière fixe un boulon d'appui (13b), de telle sorte que, dans la position de repos, le levier (13a) est en appui contre le boulon d'appui (13b), et **en ce que**, pour le déclenchement du deuxième dispositif de retenue, il est prévu une butée (10) agencée fixe dans la partie inférieure du boîtier en coffret (1), à proximité du fond de celui-ci mais au-dessus du levier (13a), de telle sorte que, en cas de mouvement vers le haut de la partie centrale (2), le levier (13a), poussant contre le boulon d'appui (13b), fait pivoter le cliquet de retenue (13) de manière à libérer le support (12), et lorsque la partie centrale (2) avec la partie supérieure reprend la position insérée, le levier (13a), sous l'effet d'un pivotement vers le haut au niveau de la butée (10) passe le long de celle-ci pour reprendre la position initiale encliquetée.

5. Système de protection contre le retournement selon la revendication 4, **caractérisé en ce que** le cliquet de retenue (12) comporte une rampe d'introduction (13c) pour l'introduction du support (12).

6. Système de protection contre le retournement selon l'une quelconque des revendications 1 à 5, **caractérisé en ce que** la partie supérieure de la structure de corps de sécurité est un arceau tubulaire (3) et dans le corps profilé de la partie centrale (2) sont ménagés deux orifices oblongs (2b) destinés à recevoir les branches de l'arceau tubulaire (13) et respectivement un ressort de commande par pression (11).

7. Système de protection contre le retournement selon la revendication 6, **caractérisé en ce que** des douilles de guidage (4) sont agencées dans les orifices oblongs (2b) pour le guidage de l'arceau tubulaire (3).

8. Système de protection contre le retournement selon l'une quelconque des revendications 1 à 7, **caractérisé en ce qu'**au moins une butée (14) destinée à délimiter le mouvement d'extraction de la partie centrale (2) est agencée dans le boîtier en coffret (1) et au moins une butée (15) destinée à délimiter le mouvement d'extraction de la partie supérieure est agencée contre la partie centrale (2).

9. Système de protection contre le retournement selon l'une quelconque des revendications 1 à 8, **caractérisé en ce que**, pour bloquer la partie centrale (2) en position extraite avec le boîtier en coffret (1), une crémaillère (8) est montée fixe contre la partie centrale (2) et un cliquet d'arrêt (9) est monté pivotant contre le boîtier en coffret (1).

10. Système de protection contre le retournement selon l'une quelconque des revendications 1 à 9, **caractérisé en ce que**, pour bloquer la partie supérieure en position extraite avec la partie centrale (2), au moins une crémaillère (11) est montée fixe contre la partie supérieure et un cliquet d'arrêt (17) associé est monté pivotant contre la partie centrale (2).
